# EUROPEAN PATENT SPECIFICATION

(11) **EP 2 690 152 B1**
(45) Date of publication and mention of the grant of the patent: **12.02.2020**
(21) Application number: 12761440.2
(22) Date of filing: 14.03.2012
(51) Int. Cl.: F16D 69/02, C01G 23/00

(54) **FRICTION MATERIAL**
REIBUNGSMATERIAL
MATÉRIAU DE FROTTEMENT

(30) Priority: 22.03.2011 JP 2011062285
(43) Date of publication of application: 29.01.2014
(73) Proprietor: Nisshinbo Brake Inc., Chuo-ku Tokyo 103-8650 (JP)
(72) Inventor: YAMAMOTO, Kazuhide, Oura-gun Gunma 370-0614 (JP); HATTORI, Yasuki, Oura-gun Gunma 370-0614 (JP)
(74) Representative: Flügel Preissner Schober Seidel
(86) International application number: PCT/JP2012/001760
(87) International publication number: WO 2012/127817

(56) References cited:
- WO-A1-97/03116
- JP-A- 1 294 553
- JP-A- 2005 282 738
- JP-A- 2009 067 639
- JP-A- 2010 235 730
- US-A1- 2007 219 289

## Description

### [TECHNICAL FIELD]

The present invention relates to a friction material to be used for such as automotive disc brake pads and brake shoes.

### [BACKGROUND ART]

Conventionally, a disc brake and a drum brake are utilized as the automotive brake device, and disc brake pads and brake shoes made by fixing the friction material on a base member made of metal such as steel are utilized as a friction member of the brake device.

A friction material can be classified into three types, (1) a semi-metallic friction material including a large amount of steel fiber as a fiber base material, (2) a raw steel friction material including steel fibers in a part of the fiber base material, and (3) a Non-Asbestos-Organic (NAO) friction material including nonferrous metal fibers as a fiber base material. A friction material that causes less brake noise is demand. The friction material that uses NAO friction material has been widely used, where the friction material does not include a ferrous metal fiber such as a steel fiber and a stainless steel fiber but includes a fiber base material such as a nonferrous metal fiber, an organic fiber and an inorganic fiber, a binder such as thermosetting resin, and a friction modifier such as an organic filler, an inorganic filler, an inorganic abrasive, a lubricant and a metal particle.

A nonferrous metal fiber and/or particle such as aluminum, copper, zinc, and tin and a nonferrous metal alloy fiber and/or particle such as bronze and brass have been used as the NAO friction material.

The Japanese provisional patent publication no. 2001-107026 (Patent Document 1) discloses the friction material formed by heat press forming a friction material compositions including 1-10 weight percent of zinc fiber with the length of 1-10mm relative to the total amount of the friction material compositions and the above-explained friction material compositions. The Japanese provisional patent publication no. 2002-97455 (Patent Document 2) discloses the friction material compositions including 1-20 weight percent of phosphor bronze fiber with the length of 0.5-10mm relative to the total amount of the friction material compositions and the friction material formed by heat press forming the friction material compositions. The Japanese provisional patent publication no. 2010-285558 (Patent Document 3) discloses the friction material that at least includes a fiber base material, a friction modifier, and a heavy metal material such as a copper and that formulates at least one type of hydroxyapatite and 1-10 volume percent of zeolite. The US patent publication no. 2007/0219289 A1 (Patent Document 4) describes a friction material that includes titanate particles in an amount of 3 - 25 % by volume. The titanate particles may have particle sizes ranging from 0.1 µm to 500 µm. The International patent publication no. WO 97/03116 A1 (Patent Document 5) discloses a polyimide composition comprising talc to improve wear resistance and to reduce coefficient of friction.

The friction material that includes these nonferrous metal fiber and/or particle and nonferrous metal alloy fiber and/or particle, when making a frictional engagement with the mating member such as a disc rotor and a brake drum, forms a thin transferred film of nonferrous metal and nonferrous metal alloy on the frictional surface of the mating member. Then, the transferred film and the nonferrous metal and nonferrous metal alloy components existing on the frictional surface of the friction material create an adhesive friction, thereby enabling and creating a braking force.

However, the adhesive friction of the nonferrous metal and nonferrous metal alloy heavily depends on temperature. Therefore, the braking force may be unstable depending upon the temperature range of the friction material. Also, metal catch, that friction dust of the mating member adheres to the friction material, tends to generate, thereby ultimately leading to a scoring problem.

Furthermore, in recent years, due to environmental consciousness, a friction material that does not contain heavy metal material such as copper and lead is becoming more desirable.

On the other hand, regardless of ferrous and nonferrous, the metal and metal alloy fibers have been used as the fiber base material in order to secure a mechanical strength of the friction material, and the problem is that, without the metal and/or metal alloy fibers, sufficient mechanical strength cannot be obtained.

### [PATENT LITERATURE]

[Patent Document 1] Japanese Provisional Patent Publication No. 2001-107026
[Patent Document 2] Japanese Provisional Patent Publication No. 2002-97455
[Patent Document 3] Japanese Provisional Patent Publication No. 2010-285558
[(Patent Document 4] United States Patent Application Publication No. 2007/0219289
[(Patent Document 5] International Patent Application Publication No. WO 97/03116

### [SUMMARY]

The present invention has been made in view of the above-circumstances. The present invention relates to the friction material used for the brake pad and the brake shoe of the automotive brake device, and an object of the present invention is to provide the friction material with sufficiently stable braking force and sufficient mechanical strength.

For the purpose of securing sufficient mechanical strength of the friction material without metal and/or metal alloy fibers, a relatively large amount of plate-like titanate was added as the inorganic filler having stiffening effect. However, when the large amount of plate-like titanate was added, the plate-like titanate transferred film formed on the frictional surface of the mating member excessively becomes thick while making a frictional engagement between the friction material and the mating member, and as a result, the friction coefficient decreases and no sufficient braking force can be obtained.

Normally, in order to adjust an appropriate thickness of the transferred film, the amount of the abrasive materials that grind the transferred film is increased or more stiff abrasive materials are added; however, such a technique tends to increase a chance of generating the braking noise.

The inventors of the present invention considered that a more effective means to adjust the appropriate thickness of the plate-like titanate transferred film is to decrease the strength of the plate-like titanate transferred film rather than arranging the amount and types of the abrasive materials and focused on the decrease of the strength. Then, the inventors combined the plate-like titanate and hydrous magnesium silicate to obtain the combination transferred film of the plate-like titanate and hydrous magnesium silicate that has less strength than the plate-like titanate transferred film and therefore reached the present invention that can control the appropriate thickness of the transferred film without adding more stiff abrasive materials.

The present invention provides:
(1) A friction material with the features of claim 1.
(2) The friction material of the above (1), in which the average particle diameter of the plate-like titanate is 20 to 40µm.
(3) The friction material of the above (1) or (2), in which the plate-like titanate is a potassium hexatitanate.

It is an object of the present invention to provide the friction material that has sufficient and stable braking force and sufficient mechanical strength.

### [BRIEF DESCRIPTION OF DRAWINGS]

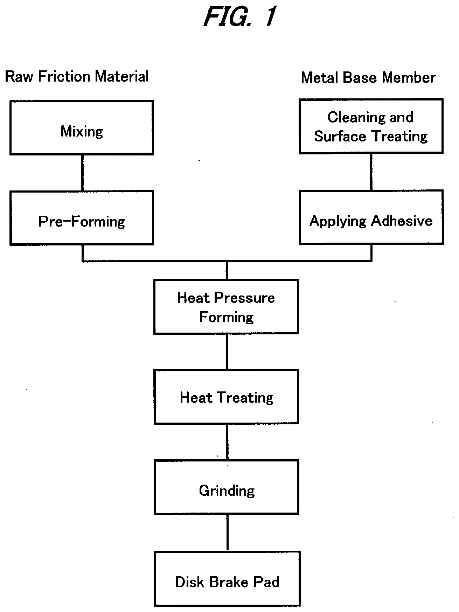

FIG. 1 is a view showing one example of the manufacturing process of the disc brake pad utilizing the friction material of the present invention;

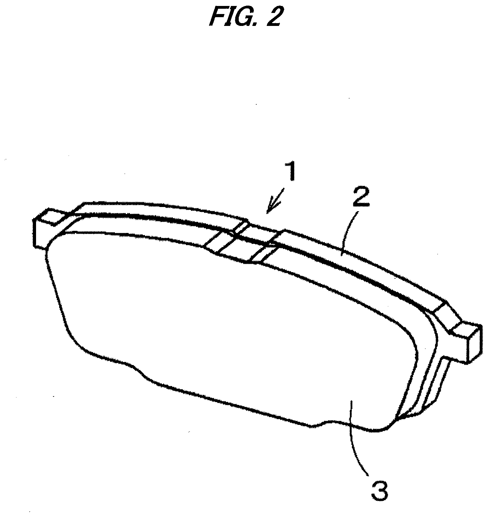

FIG. 2 is a perspective view showing one example of the disc brake pad utilizing the friction material of the present invention;

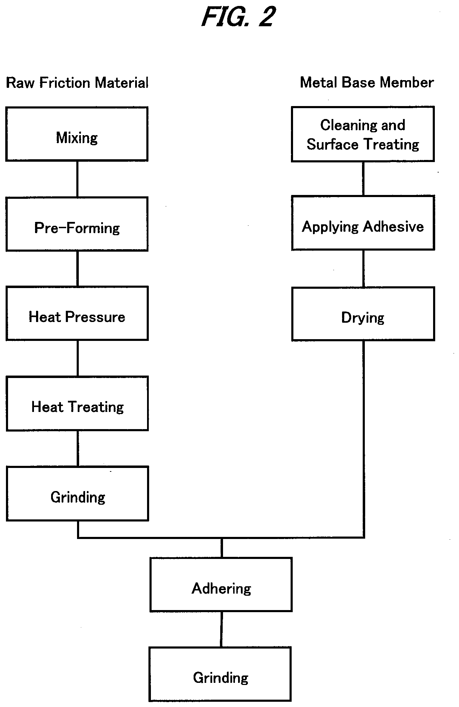

FIG. 3 is a view showing one example of the manufacturing process of the brake shoe utilizing the friction material of the present invention; and

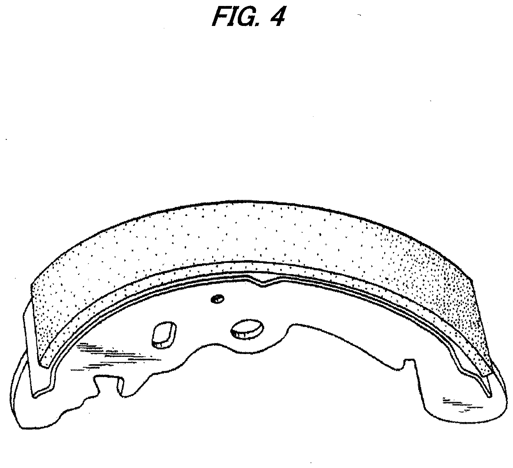

FIG. 4 is a perspective view showing one example of the brake shoe utilizing the friction material of the present invention.

### [DESCRIPTION OF EMBODIMENTS]

In the present invention, the friction material is arranged so that an amount of the plate-like titanate with average particle diameter of 10 to 50µm and the hydrous magnesium silicate is designed to be 20 to 30 volume percent relative to the total amount of the friction material and the volume ratio of the plate-like titanate and the hydrous magnesium silicate is designed to be 12:1 to 5:1.

If the prescription of the plate-like titanate and the hydrous magnesium silicate deviates from the above-ranges, (1) the friction material may not obtain sufficient mechanical strength, (2) the wear resistance may be adversely affected, (3) in the case that a strength of the transferred film formed on the frictional surface of the mating member become to large, an excessive thickness of the transferred film is generated, and then the frictional coefficient decreases, in the result, the friction material may not obtain sufficient braking force, and (4) in the case that a strength of the transferred film becomes too little, the transferred film is not generated, and then frictional coefficient decreases, in the result, the friction material may not obtain sufficient braking force.

When the average particle diameter of the above-described plate-like titanate is 20 to 40 µm, the balance between the braking force and the mechanical strength becomes preferable and it is desirable. Also, the plate-like titanate may be such as potassium hexatitanate, potassium octatitanate, lithium potassium titanate, and magnesium potassium titanate, but using potassium hexatitanate with high heat resistance improves the wear resistance and is preferable.
Here, the average particle diameter of the present invention is 50 percent. The particle diameter is measured by a Laser Diffraction-type Particle Size Distribution Measuring Method.

In addition to the above-described plate-like titanate and hydrous magnesium silicate, the friction material of the present invention includes materials that are normally used for the friction material, for example, fiber base materials such as organic fibers and inorganic fibers, binders such as thermosetting resin, and friction modifiers such as organic fillers, inorganic fillers, and lubricants.

The fiber base material may be organic fibers such as aramid fibers and acrylic fibers and inorganic fibers such as carbon fibers, ceramic fibers, and rock wool, and these fibers can be used alone or in combination. The content of the fiber base material, in order to secure the sufficient mechanical strength, is preferably 5 to 60 volume percent relative to the total amount of the friction material and 10 to 50 volume percent relative to the total amount of the friction material is more preferable.

The binder contains at least (1) a thermosetting resin selected from a phenolic resin and epoxy resin, (2) a resin obtained by modifying the above thermosetting resin by cashew oil, silicone oil, or various elastomers, and (3) a resin obtained by dispersing the various elastomers, and a fluorinated polymer in the above thermosetting resin.
These resins may be used alone or in combination.

The content of the binder, in order to secure the sufficient mechanical strength and wear resistance, is preferably 10 to 30 volume percent relative to the total amount of the friction material and more preferably 12 to 25 volume percent relative to the total amount of the friction material.

The friction modifier may be organic fillers such as cashew dusts, rubber dusts (pulverized rubber powder of tire tread rubber), and various unvulcanized rubber particles and various vulcanized rubber particles, inorganic fillers such as barium sulfate, calcium carbonate, calcium hydroxide, vermiculite, and mica, and lubricants such as molybdenum disulfide, tin sulfide, zinc sulfide, and iron sulfide. These friction modifiers may be used alone or in combination.

The content of the friction modifier should be adjusted according to the desirable frictional characteristics but is preferably 40 to 70 volume percent relative to the total amount of the friction material and is more preferably 50 to 70 volume percent relative to the total amount of the friction material.

The friction material of the present invention is manufactured through a mixing step of stirring the mixture of the predetermined amount of the above-described plate-like titanate, the hydrous magnesium silicate, the fiber base material, the binder, and the friction modifier by a mixer, a heat press forming step of filling the obtained raw friction material mixture into a heat forming die to heat-press-form the same, a heat treatment step of heating the obtained heat product to complete the binder curing, and a grinding step to form the friction surface. As necessary, prior to the heat press forming step, a granulation step of granulating the raw friction material mixture and a pre-forming step of forming a preformed product by filling the raw friction material mixture or granulated raw friction material mixture into a pre-forming die may be conducted, and after the heat press forming step, a coating step, a baking after coating step, and/or a scorching step are conducted.

When manufacturing the disc brake pad, in the heat press forming step, the forming process is performed while superposing the metal back plate such as steel back plate, which is pre-washed, surface treated, and coated with adhesive, with the above-described raw friction material mixture or the granulated product and the preformed product.

### [Embodiments]

Preferred embodiments and comparative examples of the present invention will be explained in concrete but the present invention is not limited to the following embodiments.

### [Manufacturing Method of Friction Material According to Embodiments 1-9 and Comparative Examples 1-7]

The frictional material compositions as shown in TABLES 1 and 2 are stirred for 5 minutes using Loedige mixer and the mixture is pressed in the preforming die under 10MPa for 1 minute. This preformed product is superposed on the steel back plate that is prewashed, surface treated and coated with adhesive, and the preformed product with the back plate is heated at the forming temperature of 150 degrees centigrade and pressurized under the forming pressure of 40MPa in the heat forming die for 10 minutes. Then, the resultant product is heat treated (post-curing) at 200 degrees centigrade for 5 hours and is grinded to make the automotive disc brake pad (see Embodiments 1-9 and Comparative Examples 1-7). Regarding the mechanical strength, the wear resistance, braking force, and stability of braking force are evaluated. The results of the evaluation can be seen in TABLES 1 and 2.

**[TABLE 1]**

| | | Embodiments | | | | | | | | |
|---|---|---|---|---|---|---|---|---|---|---|
| | | 1 | 2 | 3 | 4 | 5 | 6 | 7 | 8 | 9 |
| Fiber Base | Para-aramid Pulp | 13 | 13 | 13 | 13 | 13 | 13 | 13 | 13 | 13 |
| | Copper Fiber | 0 | 0 | 0 | 0 | 0 | 0 | 0 | 0 | 0 |
| Binder | Straight Phenolic Resin | 10 | 10 | 10 | 10 | 10 | 10 | 10 | 10 | 10 |
| | Acrylic Rubber Modified Phenolic Resin | 10 | 10 | 10 | 10 | 10 | 10 | 10 | 10 | 10 |
| | Potassium Hexatitanate (average particle diameter of 5µm) | 0 | 0 | 0 | 0 | 0 | 0 | 0 | 0 | 0 |
| | Potassium Hexatitanate (average particle diameter of 10µm) | 24 | 0 | 0 | 0 | 0 | 0 | 0 | 0 | 0 |
| | Potassium Hexatitanate (average particle diameter of 20µm) | 0 | 24 | 24 | 24 | 0 | 0 | 0 | 18 | 27 |
| | Potassium Hexatitanate (average particle diameter of 40µm) | 0 | 0 | 0 | 0 | 24 | 0 | 0 | 0 | 0 |
| | Potassium Hexatitanate (average particle diameter of 50µm) | 0 | 0 | 0 | 0 | 0 | 24 | 0 | 0 | 0 |
| | Potassium Hexatitanate (average particle diameter of 60µm) | 0 | 0 | 0 | 0 | 0 | 0 | 0 | 0 | 0 |
| Inorganic Filler | Potassium Octatitanate (average particle diameter of 20µm) | 0 | 0 | 0 | 0 | 0 | 0 | 24 | 0 | 0 |
| | Hydrous magnesium silicate | 3 | 2 | 3 | 4 | 3 | 3 | 3 | 2.5 | 3 |
| | Zirconium Silicate | 1 | 1 | 1 | 1 | 1 | 1 | 1 | 1 | 1 |
| | Zirconium Oxide | 3 | 3 | 3 | 3 | 3 | 3 | 3 | 3 | 3 |
| | Mica | 3 | 3 | 3 | 3 | 3 | 3 | 3 | 3 | 3 |
| | Magnetite | 3 | 3 | 3 | 3 | 3 | 3 | 3 | 3 | 3 |
| | Cokes | 5 | 5 | 5 | 5 | 5 | 5 | 5 | 5 | 5 |
| | Zinc Sulfide | 2 | 2 | 2 | 2 | 2 | 2 | 2 | 2 | 2 |
| | Calcium Hydroxide | 2 | 2 | 2 | 2 | 2 | 2 | 2 | 2 | 2 |
| | Barium Sulfate | 11 | 12 | 11 | 10 | 11 | 11 | 11 | 17.5 | 8 |
| | Bronze Particles | 0 | 0 | 0 | 0 | 0 | 0 | 0 | 0 | 0 |
| Organic Filler | Rubber Powder of Tire Tread Rubber | 3 | 3 | 3 | 3 | 3 | 3 | 3 | 3 | 3 |
| | Cashew Dust | 7 | 7 | 7 | 7 | 7 | 7 | 7 | 7 | 7 |
| Total | | 100 | 100 | 100 | 100 | 100 | 100 | 100 | 100 | 100 |
| Evaluation | Wear Resistance | Δ | ○ | ○ | ○ | ○ | Δ | Δ | Δ | Δ |
| | Braking Force | ○ | Δ | ○ | Δ | ○ | ○ | ○ | Δ | Δ |
| | Braking Stability | ○ | ○ | ○ | ○ | ○ | ○ | ○ | ○ | ○ |
| Note | Total of Plate-Like Titanate and Hydrous magnesium silicate | 27 | 26 | 27 | 28 | 27 | 27 | 27 | 20.5 | 30 |
| | Volume Ratio of Plate-Like Titanate and Hydrous magnesium silicate | 8:1 | 12:1 | 8:1 | 6:1 | 8:1 | 8:1 | 8:1 | 7.2: 1 | 9:1 |

**[TABLE 2]**

| | | Comparative Examples | | | | | | |
|---|---|---|---|---|---|---|---|---|
| | | 1 | 2 | 3 | 4 | 5 | 6 | 7 |
| Fiber Base | Para-aramid Pulp | 13 | 13 | 13 | 13 | 13 | 13 | 13 |
| | Copper Fiber | 0 | 0 | 0 | 0 | 0 | 0 | 10 |
| Binder | Straight Phenolic Resin | 10 | 10 | 10 | 10 | 10 | 10 | 10 |
| | Acrylic Rubber Modified Phenolic Resin | 10 | 10 | 10 | 10 | 10 | 10 | 10 |
| | Potassium Hexatitanate (average particle diameter of 5µm) | 24 | 0 | 0 | 0 | 0 | 0 | 0 |
| | Potassium Hexatitanate (average particle diameter of 10µm) | 0 | 0 | 0 | 0 | 0 | 0 | 0 |
| | Potassium Hexatitanate (average particle diameter of 20µm) | 0 | 0 | 24 | 24 | 16 | 28 | 0 |
| | Potassium Hexatitanate (average particle diameter of 40µm) | 0 | 0 | 0 | 0 | 0 | 0 | 0 |
| | Potassium Hexatitanate (average particle diameter of 50µm) | 0 | 0 | 0 | 0 | 0 | 0 | 0 |
| | Potassium Hexatitanate (average particle diameter of 60µm) | 0 | 24 | 0 | 0 | 0 | 0 | 0 |
| Inorganic Filler | Potassium Octatitanate (average particle diameter of 20µm) | 0 | 0 | 0 | 0 | 0 | 0 | 0 |
| | Hydrous magnesium silicate | 3 | 3 | 6 | 1.5 | 2 | 4 | 0 |
| | Zirconium Silicate | 1 | 1 | 1 | 1 | 1 | 1 | 1 |
| | Zirconium Oxide | 3 | 3 | 3 | 3 | 3 | 3 | 3 |
| | Mica | 3 | 3 | 3 | 3 | 3 | 3 | 3 |
| | Magnetite | 3 | 3 | 3 | 3 | 3 | 3 | 3 |
| | Coke | 5 | 5 | 5 | 5 | 5 | 5 | 5 |
| | Zinc Sulfide | 2 | 2 | 2 | 2 | 2 | 2 | 2 |
| | CalciumHydroxide | 2 | 2 | 2 | 2 | 2 | 2 | 2 |
| | Barium Sulfate | 11 | 11 | 8 | 12.5 | 20 | 6 | 23 |
| | Bronze Particles | 0 | 0 | 0 | 0 | 0 | 0 | 5 |
| Organic Filler | Rubber Powder of Tire Tread Rubber | 3 | 3 | 3 | 3 | 3 | 3 | 3 |
| | Cashew Dust | 7 | 7 | 7 | 7 | 7 | 7 | 7 |
| Total | | 100 | 100 | 100 | 100 | 100 | 100 | 100 |
| Evaluation | Wear Resistance | × | × | ○ | ○ | × | × | ○ |
| | Braking Force | Δ | Δ | × | × | ○ | ○ | ○ |
| | Braking Stability | ○ | ○ | ○ | ○ | ○ | ○ | × |
| Note | Total of Plate-Like Titanate and Hydrous magnesium silicate | 27 | 27 | 30 | 25.5 | 18 | 32 | - |
| | Volume Ratio of Plate-Like Titanate and Hydrous magnesium silicate | 8:1 | 8:1 | 4:1 | 16:1 | 8:1 | 7:1 | - |

**[TABLE 3]**

| Evaluating Items | Wear Resistance | Braking Force | Braking Stability |
|---|---|---|---|
| Evaluation Method | In accordance with JASO C427 "Wear Test Procedure on Inertia Dynamometer - Brake Friction Materials" Initial brake temp.: 100 degrees centigrade 1000 times of brake applications | In accordance with JASO C406 "Passenger Car - Braking Device - Dynamometer Test Procedure" Average Frictional Coefficient ( *µ* ) of Second effective Test | In accordance with JASO C406 "Passenger Car - Braking Device - Dynamometer Test Procedure" Difference between Average Frictional Coefficient ( *µ* ) of Second effective Test at 50km/h and at 130km/h |
| ○ | lower than 0.1mm | 0.40 or higher but lower than 0.45 | Lower than 0.05 |
| Δ | 0.1mm or higher but lower than 0.2mm | 0.36 or higher but lower than 0.40 | 0.05 or higher but lower than 10 |
| × | 0.2mm or higher | Lower than 0.36 | 0.10 or higher |

According to the evaluation results of TABLES 1 and 2, the friction material of the present invention shows sufficiently stable braking force and effective mechanical strength.

### [Industrial Applicability]

The friction material of the present invention is practically valuable friction material to be used in the disc brake and the drum brake for the automotive brake device and at the same time sufficiently complies with the current needs of the friction material without the heavy metal such as copper and lead.

### [Reference Numbers]

1. disc brake pad
2. back plate
3. friction material
4. brake shoe
5. brake shoe body
6. lining

## Claims

1. A friction material that does not include a metal or a metal alloy, **characterized in that** said friction material includes:
a binder being at least (1) a thermosetting resin selected from a phenolic resin and epoxy resin, (2) a resin obtained by modifying said thermosetting resin by cashew oil, silicon oil or various elastomers, and/or (3) a resin obtained by dispersing various elastomers and/or fluorinated polymer in said thermosetting resin;
a flat flake shaped titanate with average diameter of 10 to 50 µm as an inorganic filler, the average diameter being measured according to a Laser Diffraction-Type Particle Size Distribution Measuring Method, and
a hydrous magnesium silicate as an inorganic filler,
wherein an amount of said flat flake shaped titanate and said hydrous magnesium silicate is 20 to 30 volume percent relative to the total amount of the friction material,
and
wherein the volume ratio of said flat flake shaped titanate and said hydrous magnesium silicate is 12:1 to 5:1.

2. The friction material of Claim 1, **characterized in that** the average diameter of said flat flake shaped titanate is 20 to 40 µm.

3. The friction material of Claim 1 or 2, **characterized in that** the flat flake shaped titanate is potassium hexatitanate.

## Patentansprüche

1. Reibungsmaterial, das weder ein Metall noch eine Metalllegierung enthält,
**dadurch gekennzeichnet, dass** das Reibungsmaterial umfasst:
ein Bindemittel, das mindestens (1) ein wärmehärtbares Harz ist, gewählt aus Phenolharz und Epoxidharz, (2) ein Harz, erhalten durch Modifizieren des wärmehärtbaren Harzes durch Cashewnussöl, Silikonöl oder diverse Elastomere, und/oder (3) ein Harz, erhalten durch Dispergieren verschiedener Elastomere und/oder einem fluorierten Polymer in dem wärmehärtbaren Harz;
ein schuppenförmiges Titanat mit einem mittleren Durchmesser von 10 bis 50 µm als anorganischen Füllstoff, wobei der mittlere Durchmesser gemäß der Messmethode der Teilchengrößenverteilung vom Laserbeugungstyp bestimmt wird, und
wasserhaltiges Magnesiumsilikat als anorganischen Füllstoff,
wobei die Menge des schuppenförmigen Titanats und des wasserhaltigen Magnesiumsilikats 20 bis 30 Volumenprozent beträgt, bezogen auf die Gesamtmenge des Reibungsmaterials,
und
wobei das Volumenverhältnis des schuppenförmigen Titanats und des wasserhaltigen Magnesiumsilikats 12:1 bis 5:1 beträgt.

2. Das Reibungsmaterial nach Anspruch 1, **dadurch gekennzeichnet, dass** der mittlere Durchmesser des schuppenförmigen Titanats 20 bis 40 µm beträgt.

3. Das Reibungsmaterial nach Anspruch 1 oder 2, **dadurch gekennzeichnet, dass** das schuppenförmige Titanat Kaliumhexatitanat ist.

## Revendications

1. Matériau de friction qui n'inclut pas de métal ni d'alliage de métal, **caractérisé en ce que** ledit matériau de friction inclut:
un liant qui est au moins (1) une résine thermodurcissable sélectionnée parmi une résine phénolique et une résine époxy, (2) une résine obtenue en modifiant ladite résine thermodurcissable par de l'huile de cajou, de l'huile de silicone ou divers élastomères, et/ou (3) une résine obtenue en dispersant divers élastomères et/ou du polymère fluoré dans ladite résine thermodurcissable ;
un titanate en forme de flocons plats avec un diamètre moyen de 10 à 50 µm à titre de charge inorganique, le diamètre moyen étant mesuré en accord avec une méthode de mesure de distribution de tailles de particules du type à diffraction laser, et
un silicate de magnésium hydrique à titre de charge inorganique,
dans lequel une quantité dudit titanate en forme de flocons plats et dudit silicate magnésium hydrique est de 20 à 30 % en volume par rapport à la quantité totale du matériau de friction,
et
dans lequel le rapport volumétrique dudit titanate en forme de flocons plats et dudit silicate de magnésium hydrique est de 12:1 à 5:1.

2. Matériau de friction selon la revendication 1, **caractérisé en ce que** le diamètre moyen dudit titanate en forme de flocons plats est de 20 à 40 µm.

3. Matériau de friction selon la revendication 1 ou 2, **caractérisé en ce que** ledit titanate en forme de flocons plats est du hexa titanate de potassium.
